# EUROPÄISCHE PATENTSCHRIFT

(11) **EP 1 022 079 B1**
(45) Veröffentlichungstag und Bekanntmachung des Hinweises auf die Patenterteilung: **14.08.2002**
(21) Anmeldenummer: 00200213.7
(22) Anmeldetag: 20.01.2000
(51) Int. Cl.: B23B 27/04

(54) **Werkzeug zum auswechseln einer Schneidplatte**
Tool for replacing a cutting insert
Outil pour le remplacement d'une plaquette de coupe

(30) Priorität: 25.01.1999 AT 4699
(43) Veröffentlichungstag der Anmeldung: 26.07.2000
(73) Patentinhaber: Plansee Tizit Aktiengesellschaft, 6600 Reutte /Tirol (AT)
(72) Erfinder: Venturini, Remus, Dipl.-Ing., 87672 Rosshaupten (DE); Göberl, Christian, 6600 Breitenwang (AT); Berger, Dietmar, 6600 Lechaschau (AT)
(74) Vertreter: Lohnert, Wolfgang, Dr.

(56) Entgegenhaltungen:
- WO-A-99/11410
- WO-A-99/12680

## Beschreibung

Die Erfindung betrifft ein Werkzeug zum Auswechseln einer Schneidplatte, die zwischen zwei auseinanderspreizbaren Schenkelteilen eines Schneidplattenhalters geklemmt gehalten ist, wobei an einem Werkzeugteil ein erstes Stützteil angeordnet ist, das an einer Aufnahme des Schneidplattenhalters abstützbar ist und beabstandet zum ersten Stützteil ein zweites Stützteil angeordnet ist, das an einer weiteren Aufnahme des Schneidplattenhalters oder der Schneidplatte abstützbar ist und wobei der Abstand der Stützteile zueinander veränderbar ist.

Ein derartiges Werkzeug ist aus der DE 295 21 424 U1 bekannt, wobei bei diesem Werkzeug der Abstand der Stützteile zueinander dadurch verändert wird, dass zumindest eines der Stützteile exzentrisch um eine Schwenkachse mittels eines Betätigungselementes verstellt wird. Eingesetzt werden solche Werkzeuge vornehmlich bei klingenförmigen Schneidplattenhaltern, wie Stechwerkzeugen, bei denen der Schneideinsatz vom federnden Schenkel eines Schneidplattenhalters in der Aufnahme festgeklemmt wird. In der Klemmposition des Schneidplattenhalters werden die Stützelemente des Werkzeuges in der Position in der die beiden Stützelemente den kleinsten Abstand zueinander aufweisen in die entsprechenden Aufnahmen des Schneidplattenhalters eingeführt. Mit Hilfe des Betätigungselementes wird der Exzenter verdreht und damit der Maximalabstand der Stützelemente zueinander erreicht, wodurch der federnde Schenkel des Schneidplattenhalters aufgespreizt wird und der Schneideinsatz entnommen werden kann.

Nachteilig bei einem derartigen Werkzeug ist, dass die maximale Aufweitung der Schenkelteile des Plattenhalters nur durch Drehung des Betätigungselementes um einen Winkel von 180° erreicht werden kann. Dadurch wird viel Platz zum Bedienen des Werkzeuges benötigt und der Ansatz des Werkzeuges am Schneidplattenträger kann je nach Einbaulage des Schneidplattenträgers oftmals nur in einer ungünstigen Position erfolgen. Durch die 180° Rotation des exzentrisch gelagerten Stützteiles kommt es zu einem erhöhten Verschleiß des Werkzeuges.

Des weiteren wird durch den konstruktiv bedingten großen seitlichen Abstand des Betätigungselementes zum Schneidplattenträger und der damit verbundenen asymmetrischen Krafteinleitung keine parallele Schenkelaufweitung während des Öffnungsprozesses des Schneidplattenträgers erreicht, wodurch es zu Verbiegungen am Werkzeug selbst sowie zu einem Verzug des Schneidplattenträgers als auch zu einem verstärkten Verschleiß und einer Deformation der Stützelemente kommen kann.

Die nicht vorreröffentlichte WO 99/11410 zeigt ein Werkzeug gemäß dem Oberbegriff von Anspruch 1.

Aufgabe der vorliegenden Erfindung ist es ein Werkzeug zum Auswechseln einer Schneidplatte der eingangs genannten Art zu schaffen, das die aufgeführten Nachteile nicht mehr aufweist.

Erfindungsgemäß wird dies durch den Gegenstand von Anspruch 1 erreicht.

Durch eine derartige Ausführung des Werkzeuges wird durch das gegenseitige Verschwenken der Stützteile ein sich rasch ändernder Abstand der Stützteile voneinader erreicht, so dass schon bei verhältnismäßig geringen Verschwenkungsbewegungen einerseits das Einsetzen der Stützteile in die Aufnahmen des Schneidplattenhalters bei geklemmter Schneidplatte und andererseits eine ausreichende Spreizung des federnden Schenkels des Schneidplattenhalters zur Entnahme der Schneidplatte ermöglicht wird. Je nach dem, ob die Abstände der beiden Stützteile von der gemeinsamen Drehachse gleich oder unterschiedlich ausgelegt sind, kann der Weg der Verschwenkung der notwendig ist um von der Einsatzposition in die Spreizposition zu gelangen, variiert werden.

In einer besonders bevorzugten Ausgestaltung besteht das Werkzeug aus einem hebelförmigen Bedienteil und einem mit diesem über einen Lagerbolzen verschwenkbar verbundenen Gelenkteil, wobei das erste Stützteil in Form eines Stiftes in einem bestimmten ersten Abstand von der Drehachse des Lagerbolzens parallel zu diesem am Bedienteil und das zweite Stützteil in Form eines Stiftes in einem größeren Abstand von der Drehachse des Lagerbolzen parallel zu diesem am Gelenkteil angeordnet ist. Dadurch wird erreicht, dass die Einleitung der Bedienkraft des Werkzeuges möglichst nahe am Schneidplattenträger erfolgt, wodurch eine gute Stabilität erreicht wird und keine seitliche Abdrängung des Werkzeuges bzw. des Schneidplattenträgers erfolgt.

In einer vorteilhaften Ausgestaltung ist vorgesehen, dass am Ende des Bedienteiles eine Nut derart eingebracht ist, dass zwei parallele Laschen gebildet sind, zwischen denen ein in das Ende des Gelenkteiles eingearbeiteter Zapfen eingreift und dass der Lagerbolzen die Laschen und den Zapfen durchsetzt.

Auf diese Weise wird eine besonders gute Verbindung von Bedienteil und Gelenkteil miteinander erreicht.

In einer weiteren vorteilhaften Ausgestaltung des Werkzeuges wird der gewünschte Minimalabstand der Stützteile durch Verschwenken des Gelenkteiles um einen vorgegebenen Winkel α von der Symmetriestellung in eine Richtung und der gewünschte Maximalabstand der Stützteile durch Verschwenken des Gelenkteiles um einen vorgegebenen Winkel β < α von der Symmetriestellung in die entgegengesetzte Richtung erreicht und sind Nutengrund, Laschenenden, Zapfenende sowie Endflächen des Gelenkteiles am Ansatz des Zapfens derart ausgeführt, dass bei Erreichen der Winkel α und β entsprechende Gegenflächen an Bedienteil und Gelenkteil so in gegenseitigem Kontakt stehen, dass ein Verschwenken der beiden Teile über den vorgegebenen Wert der Winkel α und β hinaus ausgeschlossen ist.

Durch eine derartige Ausführung überschreiten die Stützteile bei einem Wechsel von der Einsatzposition mit dem gewünschten Minimalabstand, in die Spreizposition mit dem gewünschten Maximalabstand, die Symmetriestellung des Werkzeuges, in der die Achsen der Stützteile und die Drehachse des Lagerbolzen fluchten. Da die Stützteile in der Symmetriestellung den größtmöglichen Abstand aufweisen, ist der gewünschte Maximalabstand in der Spreizposition etwas geringer aber ausreichend um den Schneideinsatz leicht entnehmen zu können. Damit wird der wesentliche Vorteil erreicht, dass durch die Klemmkraft des federnden Schenkels des Schneidplattenhalters Bedienteil und Gelenkteil nach dem Überschreiten der Symmetriestellung in die durch den konstruktiv bedingten Anschlag vorgegebene Endposition unter dem Winkel β gedrückt werden und somit eine automatische Verriegelung des Werkzeuges in der Spreizposition erzielt wird.
Eine Verstellung des Werkzeuges von der Spreizposition in die Einsatzposition kann erst durch Überwindung der Klemmkraft des federnden Schenkels bis zum neuerlichen Überschreiten der Symmetriestellung erfolgen.

Vorteilhafterweise sind die jeweiligen Kontaktflächen so ausgestaltet, dass bei Erreichen des Winkels β ein theoretisch flächiger Kontakt zwischen Nutengrund und Zapfenende und/oder ein theoretisch flächiger Kontakt zwischen mindestens einem Laschenende und mindestens einer Endfäche am Ansatz des Zapfens vorgesehen ist.
Durch diese Ausgestaltung wird erreicht, dass auch bei häufiger Betätigung des Werkzeuges stets ein eine gute Verriegelung des Werkzeuges in der Spreizposition gewährleistet ist.

Klarerweise ist in der Praxis aufgrund der Fertigungstoleranzen ein echter Flächenkontakt nicht erzielbar. Aber auch eine Annäherung an einen solchen indealen Flächenkontakt ergibt eine ausgezeichnete stabile Verriegelung des Werkzeuges.

In einer letzten besonders bevorzugten Ausführungsform des Werkzeuges sind die Stützteile des Bedienteiles und des Gelenkteiles in der Symmetrieachse des Werkzeuges gesehen beidseitig am Werkzeug angeordnet.

Damit kann sich das Werkzeug in zwei gegensinnigen Positionen in den Aufnahmen des Schneidplattenhalters abstützen wodurch ungünstige Bedienungspositionen vermieden werden können und außerdem eine beidhändige Handhabung des Werkzeuges gewährleistet ist.

Im folgenden wird die Erfindung an Hand von Figuren näher erläutert.
Es zeigen:
- Figur 1: die Explosionszeichnung eines Ausführungsbeispiels eines erfingungsgemäßen Werkzeuges in perspektivischer Ansicht
- Figur 2a - 2c: die Seitenansicht des Kopfes des Werkzeuges nach Figur 1 in Einsatzposition, Symmetriestellung und Spreizposition in vergrößertem Maßstab
- Figur 3a - 3b: die Ansicht des Werkzeuges nach Figur 1 in Einführposition und Spreizposition beim Einsatz an einem Schneidplattenhalter

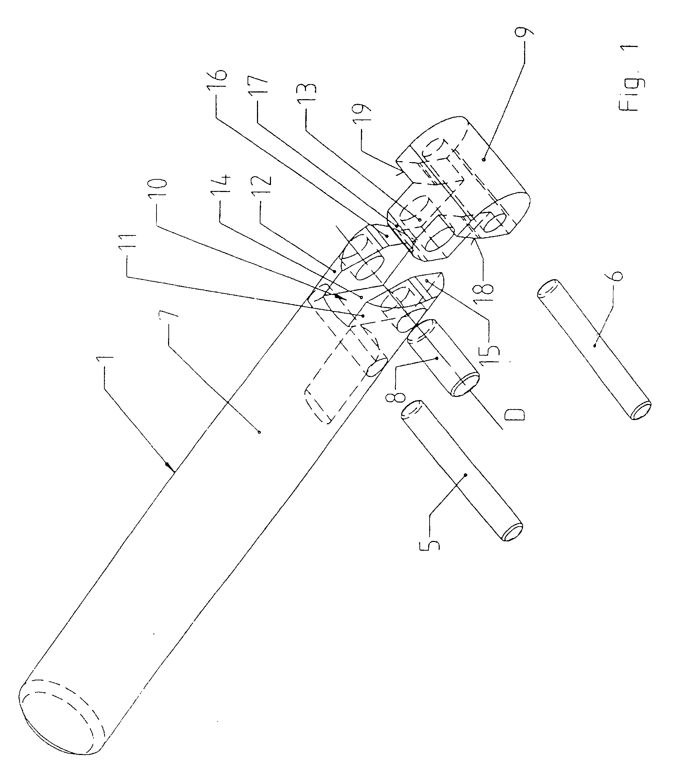

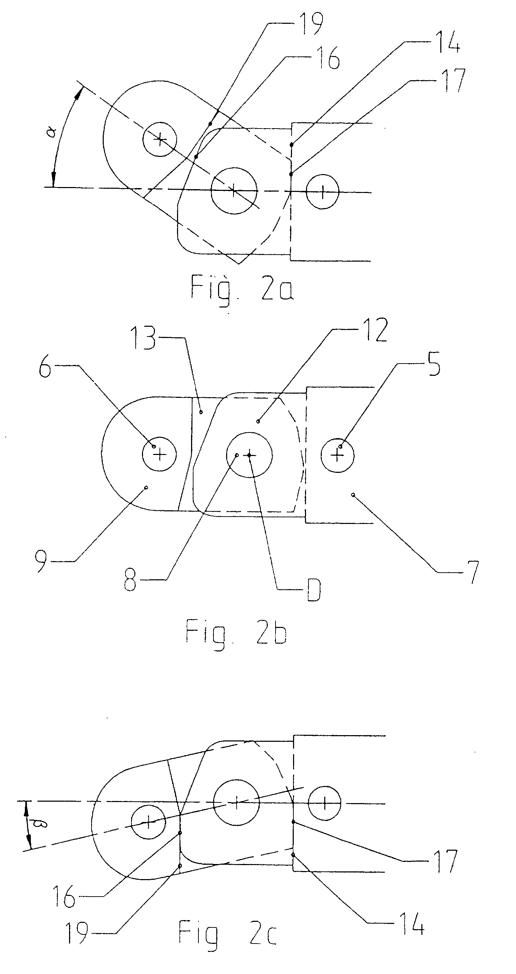

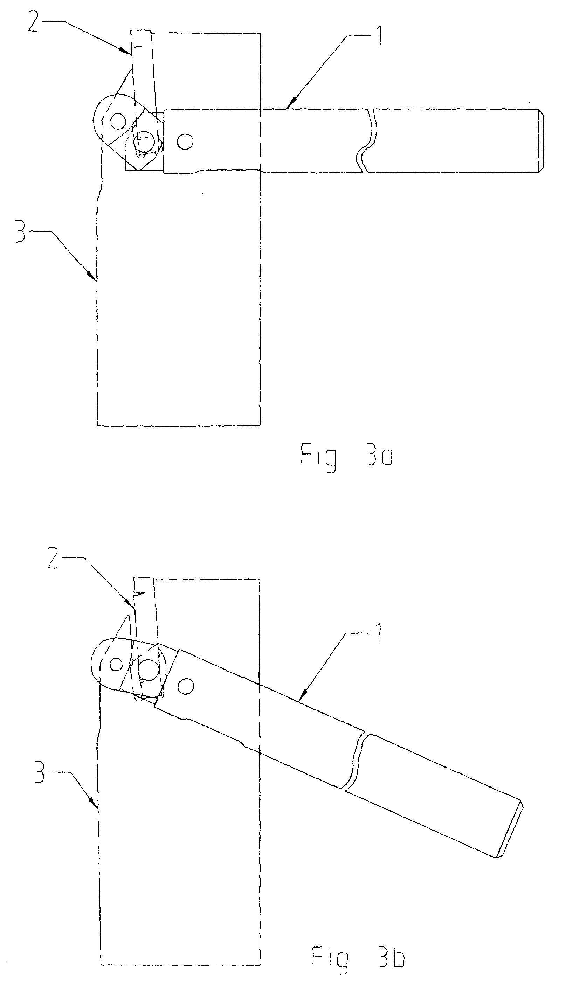

Das Werkzeug -1- nach den Figuren 1 bis 3 besteht aus einem hebelförmigen Bedienteil -7- das an einem Ende mit einer Nut -10- versehen ist. Ein Gelenkteil -9- ist an einem Ende mit einem Zapfen -13- versehen, der in die Nut -10- eingreift und von den Laschenenden -15- und -16- umschlossen ist. Durch einen Lagerbolzen -8- mit einer Drehachse D der die Laschenenden -15- und -16- sowie den Zapfen -13- durchsetzt, wird eine Gelenkverbindung zwischen Bedienteil -7- und Gelenkteil -9- geschaffen, die eine gegenseitige Verschwenkung dieser Teile zueinander ermöglicht. In vorgegebenen Abständen zur Drehachse D weisen Bedienteil -7- und Gelenkteil -9 - Stützteile -5- und -6- auf, die als Stifte in entsprechenden Bohrungen achsparallel zur Drehachse D eingesetzt sind und beidseitig über Bedienteil -7- und Gelenkteil -9- überstehen. Der Abstand des Stützteiles -6- von der Drehachse D ist dabei geringfügig größer ausgelegt als der Abstand des Stützteiles -5-. Durch gegenseitiges Verschwenken von Bedienteil -7- und Gelenkteil -9- verändert sich der Abstand der beiden Stützteile -5- und -6- zueinander.
In der Symmetriestellung des Werkzeuges -1- fluchten die Achsen der Stützteile -5- und -6- sowie die Drehachse D. In dieser Stellung weisen die beiden Stützteile -5- und -6- den größtmöglichen Abstand voneinander auf. Bei einem Verschwenken von Bedienteil -7- und Gelenkteil -9- um einen Winkel α aus der Symmetriestellung weist der Abstand der Stützteile -5- und -6- den gewünschten Minimalabstand auf. Mit diesem Minimalabstand der Stützteile -5- und -6- werden diese in entsprechende Bohrungen des Schneidplattenhalters -3-, der sich in Klemmposition befindet in welcher der federnde Schenkel den Schneideinsatz festklemmt, eingesetzt.

Bei einem Verschwenken von Bedienteil -7- und Gelenkteil -9- in Richtung Symmetriestellung des Werkzeuges durch Betätigung des Bedienteiles -7- wird der Abstand der Stützteile vergrößert und damit der federnde Schenkel des Schneidplattenhalters -3- aufgespreizt bis die Schneidplatte -2- aus dem Schneidplattenhalter -3- entnommen werden kann.

Die endgültig festgelegte Spreizstellung mit dem gewünschten Maximalabstand der Stützteile wird durch Verschwenken von Bedienteil -7- und Gelenkteil -9- um einen Winkel β über die Symmetriestellung hinaus erreicht, wobei der Winkel β kleiner als der Winkel α ist, um ein Aufspreizen gegenüber der Einsatzstellung zu erreichen und den Schneideinsatz entnehmen zu können. Das Verschwenken über die Symmetriestellung hinaus ergibt den Vorteil, dass sich aufgrund der Klemmkraft des federnden Schenkels auf einfache Weise eine automatische Verriegelung von Bedienteil -7- und Gelenkteil -9- in der Spreizposition ergibt, wenn wie vorgesehen Nutengrund -14- und Zapfenende -17- sowie die Laschenenden -15- und -16- und die Endfläche -18- und -19- des Gelenkteiles -9- am Ansatz des Zapfens -13- derart aufeinander abgestimmt sind, dass ein Verschwenken von Bedienteil -7- und Gelenkteil -9- über die vorgegebenen Werte der Winkel α und β hinaus ausgeschlossen ist. Eine Aufhebung dieser Verriegelung wird erst durch Krafteinleitung und Überwindung der Klemmkraft des federnden Schenkels bis zur Überschreitung der Symmetriestellung bewirkt.

## Patentansprüche

1. Werkzeug (1) zum Auswechseln einer Schneidplatte (2), die zwischen zwei auseinander spreizbaren Schenkelteilen eines Schneidplattenhalters (3) geklemmt gehalten ist, wobei an einem Werkzeugteil ein erstes Stützteil (5) angeordnet ist, das an einer Aufnahme des Schneidplattenhalters (3) abstützbar ist und dass beabstandet zum ersten Stützteil (5) ein zweites Stützteil (6) angeordnet ist, das an einer weiteren Aufnahme des Schneidplattenhalters (3) oder der Schneidplatte (2) abstützbar ist, wobei der Abstand der Stützteile (5,6) zueinander veränderbar ist und wobei das erste Stützteil (5) an einem hebelförmigen Bedienteil (7) und das zweite Stützteil (6) an einem über ein Lager (8) verschwenkbar mit dem Bedienteil (7) verbundenen Gelenkteil (9) angeordnet ist und der gewünschte Minimalabstand der Stützteile (5,6) durch gegenseitiges Verschwenken um einen vorgegebenen Winkel α von der Neutralstellung - in der die Mittelpunkte der beiden Stützteile (5,6) und des Lagers (8) fluchten - in eine Richtung und der gewünschte Maximalabstand der Stützteile (5,6) durch gegenseitiges Verschwenken um einen vorgegebenen Winkel β < α von der Neutralstellung in die entgegengesetzte Richtung erreicht wird,
**dadurch gekennzeichnet,**
**dass** das Lager (8) zwischen Gelenkteil (9) und hebelförmigem Bedienteil (7) an einem Ende des Bedienteiles (7) und das vom Lager (8) beabstandete erste Stützteil (5) in Richtung auf das andere Ende des Bedienteiles (7) angeordnet ist.

2. Werkzeug (1) zum Auswechseln einer Schneidplatte (2) nach Anspruch 1, **dadurch gekennzeichnet, dass** das Lager (8) ein das Bedienteil (7) und das Gelenkteil (9) durchdringender Bolzen ist und dass das erste Stützteil (5), in Form eines Stiftes in einem bestimmten ersten Abstand von der Achse des Bolzens parallel zu diesem und das zweite Stützteil (6) in Form eines Stiftes in einem zweiten größeren Abstand von der Achse des Bolzens parallel zu diesem, angeordnet ist.

3. Werkzeug (1) zum Auswechseln einer Schneidplatte (2) nach Anspruch 2, **dadurch gekennzeichnet, dass** am Ende des Bedienteiles (7) eine Nut (10) derart eingebracht ist, dass zwei parallele Laschen (11,12) gebildet sind, zwischen denen ein in das Ende des Gelenkteiles (9) eingearbeiteter Zapfen (13) eingreift und dass der Bolzen (8) die Laschen (11,12) und den Zapfen (13) durchsetzt.

4. Werkzeug (1) zum Auswechseln einer Schneidplatte (2) nach Anspruch 3, **dadurch gekennzeichnet, dass** Nutengrund (14), Laschenenden (15,16), Zapfenende (17) sowie Endflächen (18,19) des Gelenkteiles (9) am Ansatz des Zapfens (13) derart ausgeführt sind, dass bei Erreichen der Winkel α und β entsprechende Gegenflächen an Bedienteil (7) und Gelenkteil (9) so in gegenseitigem Kontakt stehen, dass ein Verschwenken der beiden Teile (7,9) über den vorgegebenen Wert der Winkel α und β hinaus ausgeschlossen ist.

5. Werkzeug (1) zum Auswechseln einer Schneidplatte (2) nach Anspruch 4, **dadurch gekennzeichnet, dass** bei Erreichen des Winkels β ein theoretisch flächiger Kontakt zwischen Nutengrund (14) und Zapfenende (17) und/oder ein theoretisch flächiger Kontakt zwischen mindestens einem Laschenende (15,16) und mindestens einer Endfläche (18,19) am Ansatz des Zapfens (13) vorgesehen ist.

6. Werkzeug (1) zum Auswechseln einer Schneidplatte (2) nach einem der Ansprüche 2 bis 5, **dadurch gekennzeichnet, dass** die Stützteile (5,6) des Bedienteiles (7) und des Gelenkteiles (9) beidseitig zur Symmetrieachse des Werkzeuges (1) angeordnet sind.

## Claims

1. A tool (1) for exchanging a cutting plate (2) which is clamped between two limb parts of a cutting-plate holder (3), which limb parts may be spread apart, a first supporting part (5) being arranged on a tool part and being supportable on a receiving means of the cutting-plate holder (3), and a second supporting part (6) being arranged spaced from the first supporting part (5) and being supportable on a further receiving means of the cutting-plate holder (3) or the cutting plate (2), the mutual spacing between the supporting parts (5, 6) being alterable and the first supporting part (5) being arranged on a lever-shaped operating part (7), and the second supporting part (6) being arranged on a joint part (9) which is pivotally connected to the operating part (7) by way of a bearing (8), and the desired minimum spacing between the supporting parts (5, 6) being achieved by a mutual pivoting in one direction through a predetermined angle α from the neutral position - in which the centre points of the two supporting parts (5, 6) and the bearing (8) are in alignment - and the desired maximum spacing between the supporting parts (5, 6) being achieved by a mutual pivoting in the opposite direction through a predetermined angle β < α from the neutral position,
**characterised in that**
the bearing (8) is arranged between the joint part (9) and the lever-shaped operating part (7) at one end of the operating part (7), and the first supporting part (5), which is spaced from the bearing (8), is arranged towards the other end of the operating part (7).

2. A tool (1) for exchanging a cutting plate (2) according to Claim 1, **characterised in that** the bearing (8) is a pin penetrating the operating part (7) and the joint part (9), and **in that** the first supporting part (5), in the form of a peg, is arranged at a particular first spacing from the axis of the pin such that it is parallel thereto, and the second supporting part (6) in the form of a peg is arranged at a second, larger spacing from the axis of the pin, such that it is parallel thereto.

3. A tool (1) for exchanging a cutting plate (2) according to Claim 2, **characterised in that** a groove (10) is incorporated at the end of the operating part (7), thus forming two parallel lugs (11, 12) between which a journal (13) incorporated in the end of the joint part (9) engages, and **in that** the pin (8) passes through the lugs (11, 12) and the journal (13).

4. A tool (1) for exchanging a cutting plate (2) according to Claim 3, **characterised in that** the groove base (14), lug ends (15, 16), journal end (17) and also end faces (18, 19) of the joint part (9) on the shoulder of the journal (13) are constructed such that, upon reaching the angles α and β, corresponding counter faces on the operating part (7) and joint part (9) are in mutual contact, thus making it impossible for the two parts (7, 9) to pivot beyond the predetermined value of the angles α and β.

5. A tool (1) for exchanging a cutting plate (2) according to Claim 4, **characterised in that**, upon reaching the angle β, there is a theoretically flat contact between the groove base (14) and journal end (17) and/or a theoretically flat contact between at least one lug end (15, 16) and at least one end face (18, 19) on the shoulder of the journal (13).

6. A tool (1) for exchanging a cutting plate (2) according to one of Claims 2 to 5, **characterised in that** the supporting parts (5, 6) of the operating part (7) and the joint part (9) are arranged one on either side of the axis of symmetry of the tool (1).

## Revendications

1. Outil (1) pour le remplacement d'une plaquette de coupe (2), qui est tenue serrée entre deux éléments en forme de branches d'un support (3) de plaquette de coupe qui peuvent être écartés l'un de l'autre, dans lequel un élément d'outil comporte un premier élément d'appui (5) qui peut s'appuyer sur un logement du support (3) de plaquette de coupe et un deuxième élément d'appui (6) qui est éloigné du premier élément d'appui (5) et peut s'appuyer sur un autre évidement du support (3) de plaquette de coupe ou de la plaquette de coupe (2), dans lequel la distance des éléments d'appui (5, 6) entre eux peut être modifiée et dans lequel le premier élément d'appui (5) est agencé sur un élément de manoeuvre (7) en forme de levier et le deuxième élément d'appui (6) est agencé sur un élément articulé (9) connecté à pivotement à l'élément de manoeuvre (7) au moyen d'un palier (8) et la distance minimale souhaitée des éléments d'appui (5, 6) est atteinte dans une première direction par un pivotement mutuel d'un angle prédéfini α à partir de la position neutre - dans laquelle les milieux des deux éléments d'appui (5, 6) et du palier (8) affleurent - et la distance maximale souhaitée des éléments d'appui (5, 6) est atteinte par un pivotement mutuel d'un angle prédéfini β, inférieur à α, à partir de la position neutre dans la direction opposée,
**caractérisé en ce que** le palier (8) est agencé entre l'élément articulé (9) et l'élément de manoeuvre (7) en forme de levier à une première extrémité de l'élément de manoeuvre (7) et le premier élément d'appui (5) est agencé est agencé à distance du palier (8) en direction de l'autre extrémité de l'élément de manoeuvre (7).

2. Outil (1) pour le remplacement d'une plaquette de coupe (2) selon la revendication 1, **caractérisé en ce que** le palier (8) est un goujon qui traverse l'élément de manoeuvre (7) et l'élément articulé (9) et **en ce que** le premier élément d'appui (5) en forme de tige est agencé à une première distance déterminée de l'axe du goujon et parallèlement à celui-ci et le deuxième élément d'appui (6) en forme de tige est agencé à une deuxième distance plus grande de l'axe du boulon et parallèlement à celui-ci.

3. Outil (1) pour le remplacement d'une plaquette de coupe (2) selon la revendication 2, **caractérisé en ce qu'**une rainure (10) est ménagée à l'extrémité de l'élément de manoeuvre (7) d'une manière telle que deux pattes parallèles (11, 12) sont formées entre lesquelles pénètre un tourillon (13) usiné dans l'extrémité de l'élément articulé (9), et **en ce que** le goujon (8) traverse les pattes (11, 12) et le tourillon (13).

4. Outil (1) pour le remplacement d'une plaquette de coupe (2) selon la revendication 3, **caractérisé en ce que** le fond (14) de rainure, les extrémités (15, 16) des pattes, l'extrémité (17) du tourillon ainsi que les surfaces d'extrémité (18, 19) de l'élément articulé (9) à l'appendice du tourillon (13) sont réalisés d'une manière telle que des contre-surfaces correspondantes de l'élément de manoeuvre (7) et de l'élément articulé (9) sont en contact mutuel lorsque l'angle α ou β est atteint de sorte qu'un pivotement des deux éléments (7, 9) au-delà de la valeur prédéterminée des angles α et β est exclu.

5. Outil (1) pour le remplacement d'une plaquette de coupe (2) selon la revendication 4, **caractérisé en ce qu'**un contact théorique à plat entre le fond (14) de rainure et l'extrémité (17) de tourillon et/ou un contact théorique à plat entre au moins une extrémité (15, 16) de patte et au moins une surface (18, 19) d'extrémité sur l'appendice du tourillon (13) est réalisé lorsque l'angle β est atteint.

6. Outil (1) pour le remplacement d'une plaquette de couple (2) selon l'une quelconque des revendications 2 à 5, **caractérisé en ce que** les éléments d'appui (5, 6) de l'élément de manoeuvre (7) et de l'élément articulé (9) sont agencés sur les deux côtés de l'axe de symétrie de l'outil (1).
